# EUROPÄISCHE PATENTSCHRIFT

(11) **EP 3 702 594 B1**
(45) Veröffentlichungstag und Bekanntmachung des Hinweises auf die Patenterteilung: **30.03.2022**
(21) Anmeldenummer: 20156802.9
(22) Anmeldetag: 12.02.2020
(51) Int. Cl.: F01N 13/00, F16L 41/00, F01N 13/16

(54) **SONDENTRÄGERANORDNUNG**
PROBE SUPPORT ASSEMBLY
SYSTÈME DE SUPPORT DE SONDE

(30) Priorität: 26.02.2019 DE 102019104770
(43) Veröffentlichungstag der Anmeldung: 02.09.2020
(73) Patentinhaber: Purem GmbH, 66539 Neunkirchen (DE)
(72) Erfinder: Mohr, Ralf, 69118 Heidelberg (DE); Guerin, Veronique, 70188 Stuttgart (DE); Jambrosic, Kresimir, 73262 Reichenbach (DE); Sigel, Ulrich, 73207 Plochingen (DE); Spieth, Arnulf, 73269 Hochdorf (DE); Vogel, Michael, 73733 Esslingen (DE); Leisten, Philippe, 72124 Rübgarten (DE)
(74) Vertreter: Ruttensperger Lachnit Trossin Gomoll

(56) Entgegenhaltungen:
- DE-A1- 10 210 313
- DE-A1- 10 324 956
- DE-A1-102010 031 656
- DE-A1-102016 113 231
- US-A- 4 495 810
- US-A1- 2007 178 026

## Beschreibung

Die vorliegende Erfindung betrifft eine Sondenträgeranordnung, die beispielsweise dazu genutzt werden kann, an einer Abgasanlage einer Brennkraftmaschine eine Meßsonde, wie zum Beispiel einen Sauerstoffsensor, einen Temperatursensor oder dergleichen, derart anzubringen, dass durch eine derartige Meßsonde Information über in der Abgasanlage strömendes Abgas bereitgestellt werden kann.

Zum Anbringen von Meßsonden an einer Abgasanlage einer Brennkraftmaschine kann an einem abgasführenden Gehäuse, wie zum Beispiel einem Katalysatorgehäuse, einem Partikelfiltergehäuse oder einem Rohr, ein Sondenstutzen durch Verschweißung festgelegt werden. In dem Sondenstutzen und dem abgasführenden Gehäuse sind Sondenaufnahmeöffnungen zur Aufnahme einer Meßsonde ausgebildet, so dass diese in Wechselwirkung mit dem in dem Gehäuse strömenden Abgas treten kann. Zur Festlegung der Meßsonde am Sondenstutzen kann in einer Sondenaufnahmeöffnung des Sondenstutzens ein Innengewinde ausgebildet sein, mit welchem ein am Außenumfang der Meßsonde ausgebildetes Außengewinde in Eingriff gebracht werden kann, um auf diese Art und Weise eine stabile und insbesondere auch gegen den Austritt von Abgas dichte Anbindung der Meßsonde zu gewährleisten.

Die DE 10 2010 031 656 A1 offenbart eine Sondenträgeranordnung gemäß dem Oberbegriff des Anspruchs 1. Bei dieser Sondenträgeranordnung ist ein Sondenstutzen mit einer Innengewindeöffnung ausgebildet. Eine in dem Sondenstutzen aufzunehmende Meßsonde ist mit einem Außengewinde aufgebaut. Auf das Außengewinde der Messsonde wird ein Sondentrageeinsatz mit einem Innengewinde desselben aufgeschraubt, der wiederum mit einem Außengewinde in die im Sondenstutzen ausgebildete Innengewindeöffnung eingeschraubt wird. Der Sondentrageeinsatz weist einen mit einer Sondenabstützfläche die Meßsonde axial abstützende und sich selbst axial am Sondenstutzen abstützenden Einsatzflansch auf und ist derart dimensioniert, dass zum Einschrauben des bereits auf die Meßsonde aufgeschraubten Sondentrageeinsatzes in den Sondenstutzen weniger als eine Umdrehung erforderlich ist.

Die US 2007/0178026 A1 offenbart eine Sondenträgeranordnung, bei welcher ein mit Innengewinde ausgebildeter Sondentrageeinsatz in eine im Wesentlichen ohne Oberflächenstrukturierung ausgebildete Einsatzaufnahmeöffnung eingesetzt und beispielsweise durch Verschweißung festgelegt ist. An dem Sondentrageeinsatz ist eine eine darin zur Aufnahme einer Meßsonde ausgebildete Sondenaufnahmeöffnung umgebende Sondenabstützfläche vorgesehen.

Es ist die Aufgabe der vorliegenden Erfindung, eine Sondenträgeranordnung, insbesondere für eine Abgasanlage einer Brennkraftmaschine, bereitzustellen, mit welcher eine verbesserte Anbindung einer Meßsonde gewährleistet werden kann.

Erfindungsgemäß wird diese Aufgabe gelöst durch eine Sondenträgeranordnung, insbesondere für eine Abgasanlage einer Brennkraftmaschine, gemäß Anspruch 1. Diese umfasst einen an einem Sondentragekörper vorgesehenen Sondenstutzen mit wenigstens einer in Richtung einer Einsatzaufnahmeöffnung-Längsachse sich erstreckenden Einsatzaufnahmeöffnung und einen in der Einsatzaufnahmeöffnung angeordneten Sondentrageeinsatz mit wenigstens einer in Richtung einer Sondenaufnahmeöffnung-Längsachse sich erstreckenden Sondenaufnahmeöffnung. Der Sondentrageeinsatz steht an einem von dem Sondentragekörper entfernten axialen Ende axial nicht über die im Sondenstutzen ausgebildete Einsatzaufnahmeöffnung hervor, und an dem Sondenstutzen ist an einem von dem Sondentragekörper entfernten axialen Ende eine die Einsatzaufnahmeöffnung umgebende Sondenabstützfläche ausgebildet.

Bei dem erfindungsgemäßen Aufbau einer Sondenträgeranordnung werden die beiden Funktionalitäten zur Einbindung derselben im Bereich des Sondenstutzens beispielsweise in eine Abgasanlage einerseits und zur Anbindung einer Meßsonde andererseits voneinander getrennt bzw. auf die beiden Elemente Sondenstutzen und Sondentrageeinsatz aufgeteilt. Jedes dieser beiden Elemente kann somit für die durch dieses bereitzustellende Funktion optimiert ausgestaltet werden, insbesondere mit einem dafür besonders geeigneten Aufbaumaterial bereitgestellt werden. Der an den Sondentragekörper anzubindende Sondenstutzen kann mit einem Material bereitgestellt werden, welches eine besonders einfache und stabile Anbindung an den Sondentragekörper gewährleistet, und der Sondentrageeinsatz kann mit für eine stabile und korrosionsbeständige Anbindung einer Meßsonde besonders geeignetem Material bereitgestellt werden. Da diese beiden Funktionalitäten auf verschiedene Elemente aufgeteilt sind, kann insbesondere das Aufbaumaterial für den Sondentrageeinsatz leicht an eine für einen speziellen Einsatzzweck zu verwendende Meßsonde angepasst werden, ohne dabei auch Veränderungen im Bereich des Sondenstutzens vornehmen zu müssen.

Bei einer baulich besonders einfach zu realisierenden Ausgestaltungsform kann der Sondenstutzen von dem Sondentragekörper separat ausgebildet sein und kann an dem Sondentragekörper durch Materialschluss, vorzugsweise Verschweißen, festgelegt sein.

Zum Verringern der Anzahl der einzusetzenden Bauteile und zum Bereitstellen einer besonders stabilen Anbindung des Sondenstutzens an den Sondentragekörper wird vorgeschlagen, dass der Sondenstutzen mit dem Sondentragekörper integral ausgebildet ist, vorzugsweise durch Fließbohren. Es ist in diesem Zusammenhang darauf hinzuweisen, dass im Sinne der vorliegenden Erfindung eine integrale Ausgestaltung bedeutet, dass der Sondentragekörper und der Sondenstutzen nicht als separate Bauteile bereitgestellt und miteinander verbunden sind, sondern aus einem Materialblock, also einstückig, hergestellt sind, beispielsweise durch Umformen eines Rohlings für den Sondentragekörper.

Eine stabile Anbindung des Sondentrageeinsatzes an den Sondenstutzen kann beispielsweise dadurch erreicht werden, dass der Sondentrageeinsatz mit dem Sondenstutzen durch Gewindeeingriff verbunden ist. Hierzu kann beispielsweise an einem Innenumfangsbereich der Einsatzaufnahmeöffnung ein Innengewinde vorgesehen sein, und an einem Außenumfangsbereich des Sondentrageeinsatzes kann ein mit dem Innengewinde des Sondenstutzens in Eingriff stehendendes Außengewinde vorgesehen sein.

Bei einer das Einbringen von Gewindeformationen nicht erfordernden, einfach zu realisierenden Ausgestaltungsform kann alternativ vorgesehen sein, dass ein Innenumfangsbereich der Einsatzaufnahmeöffnung oder/und ein Außenumfangsbereich des Sondentrageeinsatzes im Wesentlichen unstrukturiert, vorzugsweise im Wesentlichen zylindrisch, ausgebildet sind.

Dabei kann für eine stabile Halterung des Sondentrageeinsatzes im Sondenstutzen insbesondere in einer Phase, bevor eine Meßsonde in dem Sondentrageeinsatz aufgenommen wird oder beispielsweise eine materialschlüssige Verbindung zwischen dem Sondenstutzen und dem Sondentrageeinsatz hergestellt wird, dadurch gesorgt werden, dass der Sondentrageeinsatz in der Einsatzaufnahmeöffnung des Sondenstutzens mit Presspassung aufgenommen ist.

Eine definierte Positionierung des Sondentrageeinsatzes in der Einsatzaufnahmeöffnung kann dadurch erreicht und insbesondere auch nach Einbringen einer Meßsonde beibehalten werden, wenn der Sondentrageeinsatz einen bezüglich der Sondenaufnahmeöffnung-Längsachse nach radial außen vorspringenden und in Richtung der Sondenaufnahmeöffnung-Längsachse an dem Sondenstutzen oder/und dem Sondentragekörper abgestützten Einsatzflansch aufweist.

Um eine besonders stabile Fixierung für den Sondentrageeinsatz durch axiale Verspannung gewährleisten zu können, wird vorgeschlagen, dass der Einsatzflansch an einem dem Sondentragekörper nahe liegenden axialen Ende des Sondenstutzens abgestützt ist.

Die erfindungsgemäße Ausgestaltung einer Sondenträgeranordnung kann in besonders vorteilhafter Weise zum Einsatz gebracht werden, wenn ein Element von Sondenstutzen und Sondentrageeinsatz mit austenitischem Material aufgebaut ist und das andere Element von Sondenstutzen und Sondentrageeinsatz mit ferritischem Material aufgebaut ist. Grundsätzlich ist aber zu betonen, dass die erfindungsgemäß aufgebaute Sondenträgeranordnung auch mit Aufbaumaterialien der gleichen Materialgruppe für den Sondenstutzen und den Sondentrageeinsatz bereitgestellt werden kann.

Die Erfindung betrifft ferner eine Abgasanlage für eine Brennkraftmaschine, umfassend wenigstens eine erfindungsgemäß aufgebaute Sondenträgeranordnung, wobei der Sondentragekörper durch ein abgasführendes Gehäuse bereitgestellt ist.

Bei dieser Abgasanlage kann an einem von dem Gehäuse entfernten axialen Ende des Sondenstutzens die Sondenabstützfläche für eine in der Sondenaufnahmeöffnung aufgenommene Meßsonde ausgebildet sein.

Weißt der Sondentrageeinsatz einen am Sondenstutzen sich axial abstützenden Einsatzflansch auf, ist es besonders vorteilhaft, wenn der Einsatzflansch an einem dem Gehäuse nahe liegenden axialen Ende des Sondenstutzens abgestützt ist. Somit kann durch Einschrauben einer Meßsonde in den Sondentrageeinsatz eine axiale Verspannung der Meßsonde bezüglich des Sondentrageeinsatzes erzeugt werden, wodurch eine auch durch starke thermische Belastung nicht beeinträchtigte definierte Positionierung der Meßsonde bzw. des Sondentrageeinsatzes gewährleistet werden kann.

Die vorliegende Erfindung wird nachfolgend mit Bezug auf die beiliegenden Figuren detailliert beschrieben. Es zeigt:
- Fig. 1: eine Schnittdarstellung einer erfindungsgemäßen Sondenträgeranordnung mit einer daran getragenen Meßsonde;
- Fig. 2: eine Schnittdarstellung einer alternativ ausgebildeten erfindungsgemäßen Sondenträgeranordnung;
- Fig. 3: eine Schnittdarstellung einer nicht gemäß den Prinzipien der vorliegenden Erfindung aufgebauten ausgebildeten Sondenträgeranordnung;
- Fig. 4: eine Schnittdarstellung einer weiteren nicht gemäß den Prinzipien der vorliegenden Erfindung aufgebauten Sondenträgeranordnung.

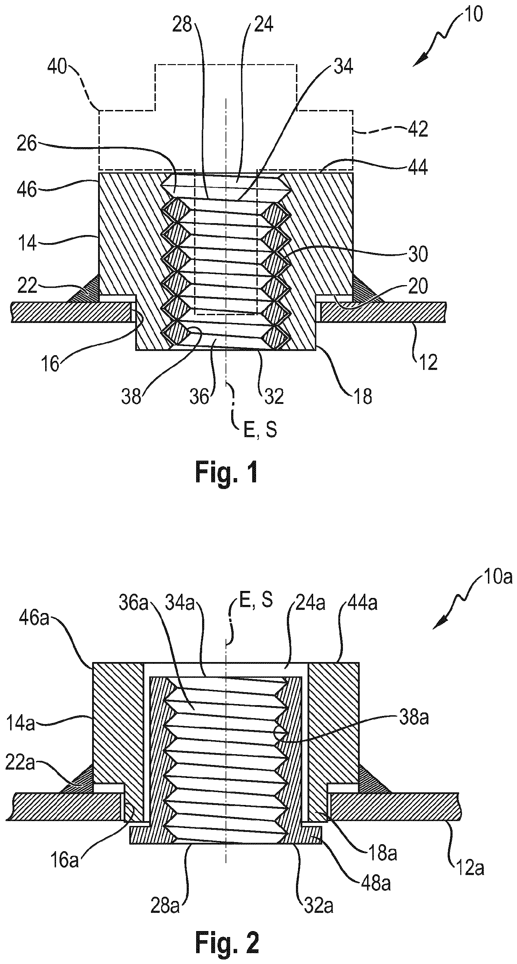

In Fig. 1 ist eine insbesondere im Bereich einer Abgasanlage einer Brennkraftmaschine in einem Fahrzeug einzusetzende Sondenträgeranordnung allgemein mit 10 bezeichnet. Die Sondenträgeranordnung 10 umfasst einen Sondentragekörper 12, der beispielsweise bereitgestellt sein kann durch ein abgasführendes Rohr einer Abgasanlage oder ein Gehäuse einer Abgasbehandlungseinheit, wie zum Beispiel Katalysator oder Partikelfilter.

An dem Sondentragekörper 12 ist ein Sondenstutzen 14 angebracht. Hierzu weist der Sondentragekörper 12 eine Öffnung 16 auf, in welche ein dem Sondentragekörper 12 nahe liegendes Ende 18 des Sondenstutzens 14 eingreift. Mit einer Radialschulter 20 kann der Sondenstutzen 14 an einer Außenoberfläche des Sondentragekörpers 12 aufliegend positioniert werden, so dass eine definierte Positionierung des Sondenstutzens 14 am Sondentragekörper 12 vorgegeben ist. Eine feste Anbindung des Sondenstutzens 14 an den Sondentragekörper kann durch Materialschluss, beispielsweise eine unterbrechungsfrei umlaufende Schweißnaht 22, bereitgestellt werden, wodurch gleichzeitig auch ein gasdichter Abschluss im Bereich des Übergangs zwischen dem Sondenstutzen 14 und dem Sondentragekörper 12 gewährleistet ist. Es ist darauf hinzuweisen, dass die Schweißverbindung zwischen dem Sondenstutzen 14 und dem Sondentragekörper 12 durch verschiedenste Schweißverfahren, wie zum Beispiel KE- Schweißen, Laserschweißen, Elektronenstrahlschweißen, Ultraschallschweißen oder Reibschweißen, erzeugt werden kann.

Im Sondenstutzen 14 ist eine in Richtung einer Einsatzaufnahmeöffnung-Längsachse E sich erstreckende Einsatzaufnahmeöffnung 24 ausgebildet. An deren Innenumfang bzw. dem Innenumfang des Sondenstutzens 14 ist ein Innengewinde 26 ausgebildet.

In der Einsatzaufnahmeöffnung 24 ist ein Sondentrageeinsatz 28 angeordnet. Der Sondentrageeinsatz 28 ist in dem in Fig. 1 dargestellten Ausgestaltungsbeispiel nach Art einer Spindel ausgebildet und weist an seinem Außenumfang ein Außengewinde 30 auf. Mit diesem Außengewinde 30 ist der Sondentrageeinsatz 28 in Gewindeeingriff mit dem Innengewinde 26 des Sondenstutzens 14, so dass durch die bei diesem Gewindeeingriff erzeugte Reibwechselwirkung zwischen dem Sondenstutzen 14 und dem Sondentrageeinsatz 28 grundsätzlich eine definierte Positionierung zwischen diesen beiden Elementen gewährleistet ist. Dabei kann beispielsweise vorgesehen sein, dass der Sondentrageeinsatz 28 weder im Bereich seines dem Sondentragekörper 12 nahe liegenden axialen Endes 32, noch in seinem vom Sondentragekörper 12 entfernten axialen Ende 34 über die im Sondenstutzen 14 ausgebildete Einsatzaufnahmeöffnung 24 axial hervor steht.

Im Sondentrageeinsatz 28 ist eine Sondenaufnahmeöffnung 36 ausgebildet. Die Sondenaufnahmeöffnung 36 erstreckt sich in Richtung einer Sondenaufnahmeöffnung-Längsachse S durch den Sondentrageeinsatz 28 vollständig hindurch, wobei die Sondenaufnahmeöffnung 36 und die Einsatzaufnahmeöffnung 24 zueinander koaxial angeordnet sein können, so dass deren Längsachsen E und S einander entsprechen.

An einem Innenumfang der Sondenaufnahmeöffnung 36 bzw. des Sondentrageeinsatzes 28 ist ein Innengewinde 38 vorgesehen. In dieses Innengewinde 38 ist ein mit Außengewinde versehener Schaftbereich einer in Fig. 1 angedeuteten Meßsonde 40 eingeschraubt. Ein Kopfbereich 42 der Meßsonde 40 stützt sich im Einbauzustand entweder direkt oder gegebenenfalls unter Zwischenlagerung eines Dichtungselements an einer Sondenabstützfläche 44 ab, die an einem vom Sondentragekörper 12 entfernten axialen Ende 46 des Sondenstutzens 14 die Einsatzaufnahmeöffnung 24 ringartig umgebend ausgebildet ist. Das axiale Ende 46 des Sondenstutzen 14 liegt also von dem Sondentragekörper 12 weiter entfernt, als das axiale Ende 18.

Über die im Sondentrageeinsatz 28 ausgebildete Sondenaufnahmeöffnung 36 und auch die im Sondenstutzen 14 ausgebildete Einsatzaufnahmeöffnung 24, die beide zu einem von dem Sondentragekörper 12 umschlossenen und von Abgas durchströmten Volumen offen sind, kann die Meßsonde 40 in Wechselwirkung mit dem in diesem Volumen strömenden Abgas treten. Beispielsweise kann die Meßsonde 40 als Sauerstoffsensor ausgebildet sein, welcher den Sauerstoffgehalt erfasst. Alternativ kann die Meßsonde 40 als Temperatursensor oder als anderer zur Erfassung der Zusammensetzung des Abgases geeigneter Sensor ausgebildet sein. Es ist auch darauf hinzuweisen, dass an einer Abgasanlage mehrere derartige Meßsonden 40 verschiedener Art aufnehmende Sondenträgeranordnungen10 an geeigneter Positionierung vorgesehen sein können.

Für den Sondenstutzen 14 einerseits und den Sondentrageeinsatz 28 andererseits können für deren Funktionalität jeweils besonders geeignete Aufbaumaterialien ausgewählt werden. So kann beispielsweise der Sondenstutzen 14 mit einem Aufbaumaterial aufgebaut werden, das eine auch unter thermischer Belastung sehr stabile materialschlüssige Verbindung mit dem Sondentragekörper 12 gewährleistet. Ist beispielsweise der Sondentragekörper 12 mit ferritischem Metallmaterial aufgebaut, ist es besonders vorteilhaft, auch den Sondenstutzen 14 mit ferritischem Metallmaterial auszugestalten, da dann gewährleistet ist, dass diese Materialien zueinander im Wesentlichen gleiche thermische Ausdehnungen aufweisen und daher im Angrenzungsbereich zwischen dem Sondenstutzen 14 und dem Sondentragekörper 12, insbesondere dort, wo die materialschlüssige Verbindung erzeugt ist, auch bei Erwärmung bzw. beim Abkühlen die materialschlüssige Verbindung besonders belastende Spannungen im Wesentlichen nicht auftreten.

Der Sondentrageeinsatz 28 kann mit einem Aufbaumaterial bereitgestellt werden, das für die Verbindungswechselwirkung mit der darin zu positionierenden Meßsonde 40 besonders geeignet ist. Ist eine derartige Meßsonde 40 insbesondere dort, wo diese in dem in Eingriff mit dem Innengewinde 38 zu bringenden Bereich ein Außengewinde aufweist, mit austenitischem Metallmaterial aufgebaut, so ist es besonders vorteilhaft, auch den Sondentrageeinsatz 28 mit austenitischem Metallmaterial auszugestalten. Dadurch ist einerseits gewährleistet, dass auch diese beiden Elemente zueinander näherungsweise gleiche thermische Ausdehnungen aufweisen, wenn eine derartige Abgasanlage erwärmt bzw. abgekühlt wird. Andererseits wird dadurch die Gefahr einer Korrosion, die zu einem Festfressen der Meßsonde 40 im Sondentrageeinsatz 28 führen kann, gemindert.

Wird für den Sondenstutzen 14 ferritisches Metallmaterial verwendet, während für den Sondentrageeinsatz 28 austenitisches Metallmaterial verwendet wird, bedeutet dies, dass aufgrund der deutlich unterschiedlichen thermischen Ausdehnungskoeffizienten dieser Materialien bei einer Erwärmung der Sondenträgeranordnung 10 der Sondentrageeinsatz 28 sich deutlich stärker ausdehnen wird, als der Sondenstutzen 14. Die dadurch auf den Sondenstutzen 14 ausgeübte Belastung kann zu einer geringfügigen plastischen Verformung des Sondenstutzens 14 führen mit der Folge, dass bei einem nachfolgenden Abkühlen ein geringfügiges Spiel in den miteinander in Eingriff stehenden Gewinden 26, 30 entstehen könnte. Auch bei Ausgestaltung des Sondenstutzens 14 aus austenitischem Metallmaterial und des Sondentrageeinsatzes 28 aus ferritischem Metallmaterial könnten wiederholt auftretende Erwärmungs- und Abkühlprozesse und dabei entstehende plastische Verformungen zu einem Lockern des Gewindeeingriffs führen. Dies ist jedoch aufgrund des Umstandes, dass der Sondentrageeinsatz 28 mit der Meßsonde 40 verschraubt und somit in Richtung der Längsachsen S und E mit dieser verspannt ist, unproblematisch, da aufgrund dieser Verspannung die miteinander in Eingriff stehenden Gewinde 26, 30 zueinander axial verspannt sind und somit eine aufgrund dieser Verspannung hervorgerufene Reibwechselwirkung eine stabile Halterung des Sondentrageeinsatzes 28 im Sondenstutzen 14 gewährleistet. Eine entsprechende axiale Verspannung entsteht auch zwischen dem am Sondentrageeinsatz 28 vorgesehenen Innengewinde 38 und dem an der Meßsonde 40 vorgesehenen Außengewinde.

Eine alternative Ausgestaltung der Sondenträgeranordnung ist in Fig. 2 dargestellt. Komponenten, welche vorangehend beschriebenen Komponenten hinsichtlich Aufbau bzw. Funktion entsprechen, sind mit dem gleichen Bezugszeichen unter Hinzufügung des Anhangs "a" bezeichnet.

Bei dem in Fig. 2 dargestellten Aufbau der Sondenträgeranordnung 10a ist der Sondenstutzen 14a am Innenumfang der darin ausgebildeten Einsatzaufnahmeöffnung 24a im Wesentlichen unstrukturiert, also insbesondere ohne Innengewinde ausgebildet. Beispielsweise kann die Einsatzaufnahmeöffnung 24a im Wesentlichen zylindrisch ausgebildet sein, kann also in Richtung der Einsatzaufnahmeöffnung-Längsachse E mit dem Wesentlichen konstanter Querschnittsgeometrie und Querschnittsabmessung bereitgestellt sein. Entsprechend ist auch der Sondentrageeinsatz 28a an seinem Außenumfang im Wesentlichen unstrukturiert, insbesondere ohne Außengewinde ausgebildet. In Anpassung an die Geometrie der Einsatzaufnahmeöffnung 24a kann auch der Sondentrageeinsatz 28a am Außenumfang des im Sondenstutzen 14a aufzunehmenden Längenbereichs desselben mit im Wesentlichen zylindrischer Geometrie bereitgestellt sein.

Im Bereich seines dem Sondentragekörper 12a nahe liegenden axialen Endes 32a weist der Sondentrageeinsatz 28a einen nach radial außen vorspringenden, um die Sondenaufnahmeöffnung-Längsachse S vorzugsweise vollständig umlaufenden Einsatzflansch 48a auf. Mit diesem Einsatzflansch 48a stützt der Sondentrageeinsatz 28a sich in Richtung der Einsatzaufnahmeöffnung-Längsachse E an dem dem Sondentragekörper 12a nahe liegenden und insbesondere in die Öffnung 16a eingreifenden axialen Ende 18a des Sondenstutzens 14a axial ab.

Der Sondentrageeinsatz 28a und die Einsatzaufnahmeöffnung 24a können so aufeinander abgestimmt sein, dass beim Zusammenbau der Sondenträgeranordnung 10a eine Presspassung erzeugt wird, wenn der Sondentrageeinsatz 28a in die Einsatzaufnahmeöffnung 24a eingeführt wird. Ein Herausfallen des Sondentrageeinsatzes 28a aus dem Sondenstutzen 14a kann somit auch in einem Zustand, in welchem eine Meßsonde noch nicht in den Sondentrageeinsatz 28a eingeschraubt ist, verhindert werden. Wird eine Meßsonde in die Sondenaufnahmeöffnung 36a eingeschraubt, so dass diese mit ihrem in Fig. 1 erkennbaren Kopfbereich sich an der am Sondenstutzen 14a gebildeten Sondenabstützfläche 44a axial abstützt, wird eine Verspannung zwischen der Meßsonde und dem Sondentrageeinsatz 28a erzeugt, da dieser mit seinem Einsatzflansch 48a gegen das axiale Ende 18a des Sondenstutzens 14a gepresst wird. Auch somit wird eine von unterschiedlichen thermischen Ausdehnungskoeffizienten des Sondenstutzens 14a einerseits und des Sondentrageeinsatzes 28a andererseits im Wesentlichen nicht beeinflusste stabile und gasdichte Halterung für eine Meßsonde gewährleistet.

Es ist darauf hinzuweisen, dass auch bei dieser Ausgestaltungsart der Sondenstutzen 14a in der vorangehend beschriebenen Art und Weise an den Sondentragekörper 12a angebunden sein kann und für den Sondentragekörper 12a, den Sonnentragestutzen 14a, den Sondentrageeinsatz 28a und die in Fig. 2 nicht dargestellte Meßsonde die vorangehend mit Bezug auf die Fig. 1 beschriebenen Aufbaumaterialien gleicher Art bzw. unterschiedlicher Art gewählt werden können.

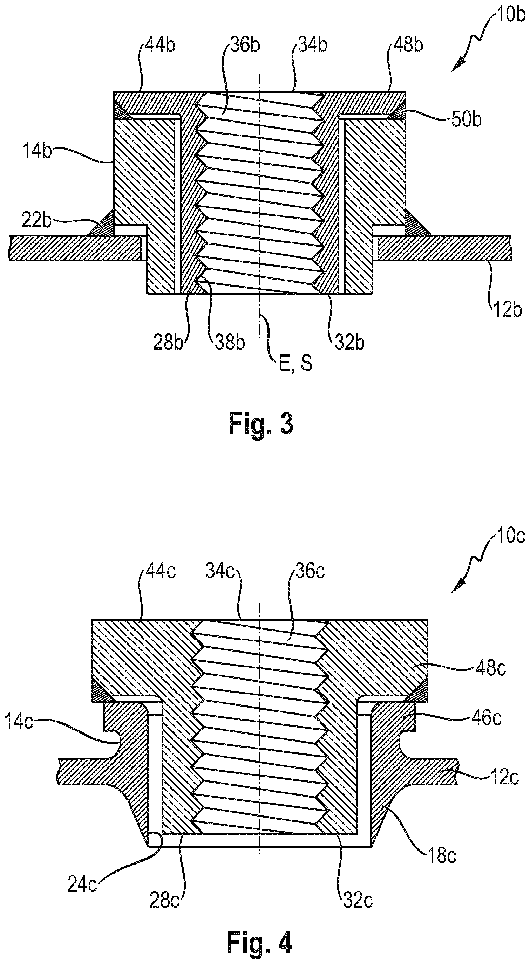

Ein nicht von der Erfindung abgedecktes Beispiel der Sondenträgeranordnung ist in Fig. 3 dargestellt. Komponenten, welche vorangehend beschriebenen Komponenten hinsichtlich Aufbau bzw. Funktion entsprechen, sind mit dem gleichen Bezugszeichen unter Hinzufügung des Anhangs "b" bezeichnet.

Das Beispiel der Fig. 3 unterscheidet sich von der in Fig. 2 dargestellten Ausgestaltungsform im Wesentlichen dadurch, dass der Einsatzflansch 48b an dem von dem Sondentragekörper 12b entfernten axialen Ende 46b des Sondenstutzens 14b axial abgestützt ist. Da der Einsatzflansch 48b dabei die vom Sondentragekörper 12b abgewandte Stirnfläche des Sondenstutzens 14b überdeckt, stellt der Sondentrageeinsatz 28b an seinem vom Sondentragekörper 12b entfernt liegenden axialen Ende 34b im Wesentlichen mit dem Einsatzflansch 48b die Sondenabstützfläche 44b bereit, an welcher der Kopfbereich der Meßsonde sich axial abstützen kann.

Für eine feste Verbindung zwischen dem Sondenstutzen 14b und dem Sondentrageeinsatz 28b ist bei dieser Ausgestaltungsform eine materialschlüssige Verbindung beispielsweise durch eine in Umfangsrichtung um die Längsachsen E, S vollständig umlaufende Schweißnaht 50b vorgesehen. Auf diese kann durch verschiedene, insbesondere die vorangehend angegebenen Schweißverfahren bereitgestellt werden. Werden für den Sondenstutzen 14b einerseits und den Sondentrageeinsatz 28b andererseits unterschiedliche Aufbaumaterialien, also beispielsweise ferritisches Metallmaterial und austenitisches Metallmaterial, verwendet, bedeutet dies, dass eine Schweißverbindung erzeugt wird zwischen zwei aus derartigen unterschiedlichen und insbesondere auch unterschiedliche thermische Ausdehnungskoeffizienten aufweisenden Materialien. Da diese Schweißverbindung jedoch an dem vom Sondentragekörper 12b entfernten axialen Ende 46b des Sondenstutzens 14b erzeugt wird, liegt diese Schweißverbindung in einem thermisch weniger stark belasteten Bereich, als beispielsweise die im Angrenzungsbereichen des Sondenstutzens 14b an den Sondentragekörper 12b generierte Schweißnaht 22b. Die Gefahr, dass aufgrund unterschiedlicher thermischer Ausdehnungen im Bereich der Schweißnaht 50b derart große Spannungen auftreten können, dass eine Beschädigung der Schweißnaht 50b entstehen könnte, besteht somit nicht. Von besonderem Vorteil ist weiter, dass die Meßsonde ausschließlich mit dem Sondentrageeinsatz 28b in Kontakt kommt, so dass eine aufgrund unterschiedlicher Materialien eingeführte Korrosionsgefahr eliminiert ist.

Ein weiteres nicht von der Erfindung abgedecktes Beispiel der Sondenträgeranordnung ist in Fig. 4 dargestellt. Komponenten, welche vorangehend beschriebenen Komponenten hinsichtlich Aufbau bzw. Funktion entsprechen, sind mit dem gleichen Bezugszeichen unter Hinzufügung des Anhangs "c" bezeichnet.

Bei dem in Fig. 4 dargestellten Aufbau ist der Sondentragekörper 12c mit dem Sondenstutzen 14c integral, also einstückig bzw. als ein Materialblock ausgebildet. Dies kann beispielsweise dadurch erzeugt werden, dass ein rohrartiger oder plattenartiger Rohling für den Sondentragekörper 12c einem Fließbohrvorgang unterzogen wird, bei welchem durch starke Belastung vermittels eines rotierenden Dorns dort, wo eine Öffnung, also die Einsatzaufnahmeöffnung 24c, und mit dieser auch der Sondenstutzen 14c zu bilden ist, das Aufbaumaterial des Rohlings verformt wird. Durch die Formgebung des bei diesem auch unter den Bezeichnungen Flowdrill-Verfahren, Glowdrill-Verfahren oder Thermodrill-Verfahren bekannten Umformungsvorgang eingesetzten Dorns kann auch die Form des dabei erzeugten und den Sondenstutzen 14c bereitstellenden Ausformungsbereichs bestimmt werden.

Bei dieser Ausgestaltungsart ist der Sondentrageeinsatz 28c mit seinem Einsatzflansch 48c das vom Sondentragekörper 12c entfernte axiale Ende 46c des Sondenstutzens 14c radial übergreifend positioniert und mit diesem durch die Schweißnaht 50c materialschlüssig fest und gasdicht verbunden. Die Sondenabstützfläche 44c ist an dem von dem Sondentragekörper 12c entfernten axialen Ende 34c des Sondentrageeinsatzes 28c vorgesehen.

Jede der vorangehend beschriebenen Ausgestaltungsformen und Beispiele weist den wesentlichen Vorteil auf, dass für den Sondenstutzen ein für dessen Anbindung an den Sondentragekörper besonders geeignetes Material eingesetzt werden kann. Ist der Sondentragekörper beispielsweise mit ferritischem Aufbaumaterial aufgebaut, kann auch der Sondenstutzen mit ferritischem Aufbaumaterial bereitgestellt werden. Ist der Sondentragekörper mit austenitischem Aufbaumaterial aufgebaut, kann auch der Sondenstutzen mit austenitischem Aufbaumaterialien bereitgestellt werden. Entsprechendes gilt auch für die Auswahl des Aufbaumaterials des Sondentrageeinsatzes in Bezug auf das Aufbaumaterial einer darin aufzunehmenden Meßsonde. Ist die Meßsonde insbesondere in ihrem zur Anbindung an den Sondentrageeinsatz vorgesehenen Bereich mit austenitischem Material aufgebaut, es ist besonders vorteilhaft, wenn auch der Sondentrageeinsatz mit austenitischem Material aufgebaut ist. Ist die Meßsonde in ihrem zur Anbindung an den Sondentrageeinsatz vorgesehenen Bereich mit ferritischem Material aufgebaut, es ist kann auch der Sondentrageeinsatz mit ferritischem Material aufgebaut sein.

Als ferritische Aufbaumaterialien können dabei beispielsweise Ferrit Nr. 1.4509 gemäß DIN EN 10088-02 mit der Bezeichnung X2CrTiNb18 oder Ferrit Nr. 1.4521 gemäß DIN EN 10088-02 mit der Bezeichnung X2CrMoTi18-2 eingesetzt werden. Als austenitische Aufbaumaterialien können beispielsweise Austenit Nr. 1.4301 gemäß DIN EN 10088-02 mit der Bezeichnung X5CrNi18-10 oder Austenit Nr. 1.4828 gemäß DIN EN 10088-02 mit der Bezeichnung X15CrNiSi20-12 eingesetzt werden.

In jedem Falle wird durch die erfindungsgemäße Ausgestaltung einer Sondenträgeranordnung gewährleistet, dass durch thermischer Belastungen hervorgerufene unterschiedliche Ausdehnungen im Bereich des Sondenstutzens einerseits und der daran anschließenden Elemente, also des Sondentrageeinsatzes bzw. des Sondentragekörpers, andererseits nicht zu derartigen mechanischen Belastungen führen können, dass Verbindungen, insbesondere materialschlüssige Verbindungen, beschädigt werden. Auch die Gefahr, dass durch unterschiedliche in Kontakt miteinander stehende Materialien eine übermäßige Korrosion auftritt, besteht nicht.

Von besonderem Vorteil ist weiter, dass mit dem mehrteiligen Aufbau die Möglichkeit besteht, durch die Kombination von beispielsweise mit verschiedenen Materialien oder/und auch verschiedenen Formgebungen aufgebauten Bauteilen leicht eine Anpassung an verschiedene Aufbauumgebungen vorzunehmen. So können beispielsweise Sondentrageeinsätze mit verschieden dimensionierten Sondenaufnahmeöffnungen vorgehalten werden, um bei unveränderter Bauart des Sondenstutzens in diesem verschieden gestaltete Messsonden aufnehmen zu können. Auch ist es möglich, in einem Sondentrageeinsatz mehrere Sondenaufnahmeöffnungen vorzusehen, um auf diese Art und Weise an einem Sondenstutzen mehrere Messsonden aufnehmen zu können. Grundsätzlich sei auch darauf hingewiesen, dass diese hinsichtlich der Variabilität einer Sondenträgeranordnung gebotenen Vorteile auch dann Anwendung finden können, wenn für die verschiedenen Bestandteile derselben, insbesondere den Sondenstutzen und den Sondentrageeinsatz, gleiche Aufbaumaterialien gewählt werden.

## Patentansprüche

1. Sondenträgeranordnung, insbesondere für eine Abgasanlage einer Brennkraftmaschine, umfassend einen an einem Sondentragekörper (12; 12a) vorgesehenen Sondenstutzen (14; 14a) mit wenigstens einer in Richtung einer Einsatzaufnahmeöffnung-Längsachse (E) sich erstreckenden Einsatzaufnahmeöffnung (24; 24a) und einen in der Einsatzaufnahmeöffnung (24; 24a) angeordneten Sondentrageeinsatz (28; 28a) mit wenigstens einer in Richtung einer Sondenaufnahmeöffnung-Längsachse (S) sich erstreckenden Sondenaufnahmeöffnung (36; 36a), wobei an einem Innenumfang der Sondenaufnahmeöffnung (36; 36a) ein Innengewinde (38; 38a) vorgesehen ist, und an dem Sondenstutzen (14; 14a) an einem von dem Sondentragekörper (12; 12a) entfernten axialen Ende (46; 46a) eine die Einsatzaufnahmeöffnung (24; 24a) umgebende Sondenabstützfläche (44, 44a) ausgebildet ist,
**dadurch gekennzeichnet, dass** der Sondentrageeinsatz (28; 28a) an einem von dem Sondentragekörper (12; 12a) entfernten axialen Ende (34; 34a) axial nicht über die im Sondenstutzen (14; 14a) ausgebildete Einsatzaufnahmeöffnung (24; 24a) hervorsteht.

2. Sondenträgeranordnung nach Anspruch 1, **dadurch gekennzeichnet,**
**dass** der Sondenstutzen (14; 14a) von dem Sondentragekörper (12; 12a) separat ausgebildet ist und an dem Sondentragekörper (12; 12a) durch Materialschluss, vorzugsweise Verschweißen, festgelegt ist,
oder
**dass** der Sondenstutzen mit dem Sondentragekörper integral ausgebildet ist, vorzugsweise durch Fließbohren.

3. Sondenträgeranordnung einem der vorangehenden Ansprüche, **dadurch gekennzeichnet, dass** der Sondentrageeinsatz (28) mit dem Sondenstutzen (14) durch Gewindeeingriff verbunden ist.

4. Sondenträgeranordnung nach Anspruch 3, **dadurch gekennzeichnet, dass** an einem Innenumfangsbereich der Einsatzaufnahmeöffnung (24) ein Innengewinde (26) vorgesehen ist, und dass an einem Außenumfangsbereich des Sondentrageeinsatzes (28) ein mit dem Innengewinde (26) des Sondenstutzens (14) in Eingriff stehendendes Außengewinde (30) vorgesehen ist.

5. Sondenträgeranordnung nach Anspruch 1 oder 2, **dadurch gekennzeichnet, dass** ein Innenumfangsbereich der Einsatzaufnahmeöffnung (24a) oder/und ein Außenumfangsbereich des Sondentrageeinsatzes (28a) im Wesentlichen unstrukturiert, vorzugsweise im Wesentlichen zylindrisch, ausgebildet sind, vorzugsweise wobei der Sondentrageeinsatz (28a) in der Einsatzaufnahmeöffnung (24a) des Sondenstutzens (14a) mit Presspassung aufgenommen ist.

6. Sondenträgeranordnung nach einem der vorangehenden Ansprüche, **dadurch gekennzeichnet, dass** der Sondentrageeinsatz (28a) einen bezüglich der Sondenaufnahmeöffnung-Längsachse (S) nach radial außen vorspringenden und in Richtung der Sondenaufnahmeöffnung-Längsachse (S) an dem Sondenstutzen (14a) oder/und dem Sondentragekörper abgestützten Einsatzflansch (48a) aufweist.

7. Sondenträgeranordnung nach Anspruch 6, **dadurch gekennzeichnet, dass** der Einsatzflansch (48a) an einem dem Sondentragekörper (12a) nahe liegenden axialen Ende (18a) des Sondenstutzens (14a) abgestützt ist.

8. Sondenträgeranordnung einem der vorangehenden Ansprüche, **dadurch gekennzeichnet, dass** ein Element von Sondenstutzen (14; 14a) und Sondentrageeinsatz (28; 28a) mit austenitischem Material aufgebaut ist und das andere Element von Sondenstutzen (14; 14a) und Sondentrageeinsatz (28; 28a) mit ferritischem Material aufgebaut ist.

9. Abgasanlage für eine Brennkraftmaschine, umfassend eine Sondenträgeranordnung (10; 10a) nach einem der vorangehenden Ansprüche, wobei der Sondentragekörper (12; 12a) durch ein abgasführendes Gehäuse bereitgestellt ist.

10. Abgasanlage nach Anspruch 9, **dadurch gekennzeichnet, dass** an einem von dem Gehäuse entfernten axialen Ende des Sondenstutzens (14; 14a) die Sondenabstützfläche (44; 44a) für eine in der Sondenaufnahmeöffnung (36; 36a) aufgenommene Meßsonde (40) ausgebildet ist.

11. Abgasanlage nach Anspruch 9 oder 10, sofern auf Anspruch 6 rückbezogen, **dadurch gekennzeichnet, dass** der Einsatzflansch (48a) an einem dem Gehäuse nahe liegenden axialen Ende (18a) des Sondenstutzens (14a) abgestützt ist.

## Claims

1. Probe carrier arrangement, especially for an exhaust system of an internal combustion engine, comprising a probe socket (14; 14a) provided at a probe carrier body (12; 12a) with at least one insert-receiving opening (24; 24a) extending in the direction of an insert-receiving opening longitudinal axis (E) and a probe carrier insert (28; 28a) arranged in the insert-receiving opening (24; 24a) with at least one probe-receiving opening (36; 36a) extending in the direction of a probe-receiving opening longitudinal axis (S), wherein an internal thread (38; 38a) is provided at an inner circumference of the probe-receiving opening (36; 36a) and a probe support surface (44; 44a) enclosing the insert-receiving opening (24; 24a) is formed at the probe socket (14; 14a) at an axial end (46; 46a) located at a distance from the probe carrier body (12; 12a),
**characterized in that**
the probe carrier insert (28; 28a) at an axial end (34; 34a) remote from the probe carrier body (12; 12a) does not axially protrude over the insert-receiving opening (24; 24a) formed in the probe socket (14; 14a).

2. Probe carrier arrangement in accordance with claim 1, **characterized in that** the probe socket (14; 14a) is formed separately from the probe carrier body (12; 12a) and is fixed to the probe carrier body (12; 12a) by connection in substance, preferably welding,
or
**in that** the probe socket is made integrally with the probe carrier body, preferably by flow drilling.

3. Probe carrier arrangement in accordance with one of the above claims, **characterized in that** the probe carrier insert (28) is connected to the probe socket (14) by thread meshing.

4. Probe carrier arrangement in accordance with claim 3, **characterized in that** an internal thread (26) is provided on an inner circumferential area of the insert-receiving opening (24) and that an external thread (30) meshing with the internal thread (26) of the probe socket (14) is provided on an outer circumferential area of the probe carrier insert (28).

5. Probe carrier arrangement in accordance with claim 1 or claim 2, **characterized in that** an inner circumferential area of the insert-receiving opening (24a) or/and an outer circumferential area of the probe carrier insert (28a) has an essentially unstructured, preferably essentially cylindrical configuration, preferably wherein the probe carrier insert (28a) is received in the insert-receiving opening (24a) of the probe socket (14a) with a press fit.

6. Probe carrier arrangement in accordance with one of the above claims, **characterized in that** the probe carrier insert (28a) has an insert flange (48a), which projects radially outwards in relation to the probe-receiving opening longitudinal axis (S) and is supported in the direction of the probe-receiving opening longitudinal axis (S) at the probe socket (14a) or/and at the probe carrier body.

7. Probe carrier arrangement in accordance with claim 6, **characterized in that** the insert flange (48a) is supported at an axial end (18a) of the probe socket (14a), which said axial end is located close to the probe carrier body (12a).

8. Probe carrier arrangement in accordance with one of the above claims, **characterized in that** one element of probe socket (14; 14a) and probe carrier insert (28; 28a) is made with an austenitic material and the other element of probe socket (14; 14a) and probe carrier insert (28; 28a) is made with a ferritic material.

9. Exhaust system for an internal combustion engine, comprising a probe carrier arrangement (10; 10a) in accordance with one of the above claims, wherein the probe support body (12; 12a) is provided by an exhaust gas-carrying housing.

10. Exhaust system in accordance with claim 9, **characterized in that** the probe support surface (44; 44a) for a measuring probe (40) received in the probe-receiving opening (36; 36a) is formed at an axial end of the probe socket (14; 14a) located at a distance from the housing.

11. Exhaust system in accordance with claim 9 or 10, if referred back to claim 6, **characterized in that** the insert flange (48a) is supported at an axial end (18a) of the probe socket (14a), located close to the housing.

## Revendications

1. Agencement de support de sonde, en particulier pour un système de gaz d'échappement d'un moteur à combustion interne, comprenant une pièce de raccord de sonde (14 ; 14a) prévue sur un corps de support de sonde (12 ; 12a) avec au moins une ouverture de réception d'insert (24 ; 24a) s'étendant dans la direction d'un axe longitudinal d'ouverture de réception d'insert (E) et un insert de support de sonde (28 ; 28a) disposé dans l'ouverture de réception d'insert (24 ; 24a) avec au moins une ouverture de réception de sonde (36 ; 36a) s'étendant dans la direction d'un axe longitudinal d'ouverture de réception de sonde (S), dans lequel un filetage intérieur (38 ; 38a) est prévu sur une circonférence intérieure de l'ouverture de réception de sonde (36 ; 36a) et dans lequel une surface d'appui de sonde (44 ; 44a) entourant l'ouverture de réception d'insert (24 ; 24a) est formée sur la pièce de raccord de sonde (14 ; 14a) à une extrémité axiale (46 ; 46a) éloignée du corps de support de sonde (12 ; 12a),
**caractérisé en ce que**
l'insert de support de sonde (28 ; 28a) à une extrémité axiale (34 ; 34a) éloignée du corps de support de sonde (12 ; 12a) ne dépasse pas axialement de l'ouverture de réception d'insert (24 ; 24a) formée dans la pièce de raccord de sonde (14 ; 14a).

2. Agencement de support de sonde selon la revendication 1, **caractérisé en ce que** la pièce de raccord de sonde (14 ; 14a) est formée séparément du corps de support de sonde (12 ; 12a) et est fixée au corps de support de sonde (12 ; 12a) par liaison de matière, de préférence par soudage,
ou
**en ce que** la pièce de raccord de sonde est réalisée en une seule pièce avec le corps de support de sonde, de préférence par fluoperçage.

3. Agencement de support de sonde selon l'une des revendications précédentes, **caractérisé en ce que** l'insert de support de sonde (28) est relié à la pièce de raccord de sonde (14) par filetage.

4. Agencement de support de sonde selon la revendication 3, **caractérisé en ce qu'**un filetage interne (26) est prévu sur une zone circonférentielle intérieure de l'ouverture de réception d'insert (24) et **en ce qu'**un filetage extérieur (30) s'engrenant avec le filetage interne (26) de la pièce de raccord de sonde (14) est prévu sur une zone circonférentielle extérieure de l'insert de support de sonde (28).

5. Agencement de support de sonde selon la revendication 1 ou la revendication 2, **caractérisé en ce qu'**une zone circonférentielle intérieure de l'ouverture de réception d'insert (24a) et/ou une zone circonférentielle extérieure de l'insert de support de sonde (28a) a une configuration essentiellement non structurée, de préférence essentiellement cylindrique, de préférence dans laquelle l'insert de support de sonde (28a) est reçu dans l'ouverture de réception d'insert (24a) de la pièce de raccord de sonde (14a) avec un ajustement serré.

6. Agencement de support de sonde selon l'une des revendications précédentes, **caractérisé en ce que** l'insert de support de sonde (28a) présente une bride d'insert (48a) qui fait saillie radialement vers l'extérieur par rapport à l'axe longitudinal d'ouverture de réception de la sonde (S) et qui est supporté en direction de l'axe longitudinal d'ouverture de réception de la sonde (S) sur la pièce de raccord de sonde (14a) et/ou sur le corps de support de sonde.

7. Agencement de support de sonde selon la revendication 6, **caractérisé en ce que** la bride d'insert (48a) est supportée à une extrémité axiale (18a) de la pièce de raccord de sonde (14a), ladite extrémité axiale étant située à proximité du corps de support de sonde (12a).

8. Agencement de support de sonde selon l'une des revendications précédentes, **caractérisé en ce qu'**un élément de la pièce de raccord de sonde (14 ; 14a) et de l'insert de support de sonde (28 ; 28a) est réalisé avec un matériau austénitique et l'autre élément de la pièce de raccord de sonde (14 ; 14a) et de l'insert de support de sonde (28 ; 28a) est réalisé avec un matériau ferritique.

9. Système d'échappement pour un moteur à combustion interne, comprenant un agencement de support de sonde (10 ; 10a) selon l'une des revendications précédentes, dans lequel le corps de support de sonde (12 ; 12a) est fourni par un boîtier de transport de gaz d'échappement.

10. Système d'échappement selon la revendication 9, **caractérisé en ce que** la surface d'appui de sonde (44 ; 44a) pour une sonde de mesure (40) reçue dans l'ouverture de réception de sonde (36 ; 36a) est formée à une extrémité axiale de la pièce de raccord de sonde (14 ; 14a) située à distance du boîtier.

11. Système d'échappement selon la revendication 9 ou 10, si on se réfère à la revendication 6, **caractérisé en ce que** la bride d'insert (48a) est supportée à une extrémité axiale (18a) de la pièce de raccord de sonde (14a), située à proximité du boîtier.
